# EUROPEAN PATENT SPECIFICATION

(11) **EP 1 376 934 B1**
(45) Date of publication and mention of the grant of the patent: **12.10.2005**
(21) Application number: 03013494.4
(22) Date of filing: 26.06.2003
(51) Int. Cl.: H04L 12/26

(54) **Method and apparatus for mirroring traffic over a network**
Verfahren und Vorrichtung zur Verkehrsspiegelung über ein Netzwerk
Procédé et appareil pour répliquer le données de traffic sur un reseau

(30) Priority: 27.06.2002 US 392116 P
(43) Date of publication of application: 02.01.2004
(73) Proprietor: ALCATEL, 75008 Paris (FR)
(72) Inventor: See, Michael, Chapel Hill, N.C. 27514 (US)
(74) Representative: Rausch, Gabriele

(56) References cited:
- GB-A- 2 333 429
- US-A- 6 041 042
- US-A1- 2002 075 809

## Description

### CROSS REFERENCE TO RELATED APPLICATION

This application claims priority from the following U.S. Provisional Patent Application: U.S. Provisional Patent Application Ser. No. 60/392,116, to Michael See, entitled, "Port Mirroring Over a Network," filed June 27, 2002, cf. US 2004003094.

### FIELD OF INVENTION

The invention generally relates to a system and method for mirroring traffic received at a first network device to a second network device. In particular, the invention relates to a method and system for conveying, selecting and encapsulating packets at the first device such that the packets may be regenerated at a second device with little or no modification to the information contained therein.

### BACKGROUND

Network administrators that manage and maintain enterprise networks sometimes have a need to monitor traffic received at a particular node in the network. Contemporary routers and switch routers permit the administrator to define a class of traffic and cause that traffic to be directed to an egress port for purposes of performing network intrusion detection or recording the traffic, for example. The analysis, however, is necessarily performed by a traffic analysis tool or recording device directly coupled to the router or switch router. There is currently no means for the administrator to direct the traffic to another node where the necessary resources reside.The problem is especially problematic in enterprise and service provider networks, for example, where the traffic to be analyzed/recorded and the resources needed to analyze/record it are separated by large distances.

There is therefore a need for an apparatus and method for selecting and transmitting traffic in its original, unaltered form from a first node in the network to a second node where it may be analyzed or recorded. Such a system would overcome the need to locate the resources needed to analyze and record traffic in the immediate proximity of the device to be studied.

US 6,041,042 discloses a method and apparatus for remote monitoring of data on a communications network, wherein data transmitted and received by a port can be examined at a location other than on the device having the examined port. A method includes the steps of selecting a mirror-from-port of a first device from which to mirror packets, selecting an analyzer port of a second device to which to mirror the packets, and mirroring the packets from the mirror-from-port of the first device to the analyzer port of the second device. The mirroring step may include establishing a connection path through the network, encapsulating the packets with a connection path identifier, and sending the encapsulated packets through the network to the second device.

### SUMMARY

The invention in the preferred embodiment comprises a traffic mirroring method for transmitting incoming packets from a source network device to a target network device. The traffic mirroring method comprising the steps of duplicating a plurality of ingress packets received at the source network device, such that a plurality of duplicate packets are formed; encapsulating the plurality of duplicate packets with a mirrored flow encapsulation header, such that a plurality of mirrored flow encapsulation packets are formed; transmitting the plurality of mirrored flow encapsulation packets from the source network device to the target network device; and switching the plurality of ingress packets to the one or more nodes specified by the destination address information embedded therein.

Upon receipt at the target network device, the mirrored flow encapsulation packets are de-encapsulated by removing the mirrored flow encapsulation header. The resulting de-encapsulated packets that are recovered are substantially identical to the ingress packets as received by the source network device. The substantially identical copy of the said plurality of ingress packets may then be transmitted to and processed by an analysis device connected to the target device as if the analysis tool where actually connected directly to the source network device.

In some embodiments, the mirrored flow encapsulation header comprises a network layer encapsulation header. The network layer encapsulation header is, in the preferred embodiment, an IP header that comprises the destination address of the target network device, while alternative embodiments employ a label such as a MPLS label. The ingress packets to which the network layer encapsulation header is attached preferably retains its own network layer encapsulation header including the Internet Protocol (IP) and Media Access Control (MAC) destination addresses used to convey the ingress packet to the source network device. The IP destination address may be that of the intended recipient, i.e. a destination node reachable through the source network device, such as the source network device or other node.

Ingress packets are preferably identified in the ingress stream and selected for processing using mirror classification criteria. The mirror classification criteria used to select include physical ingress and egress port number on the source network device, OSI model layer 2 source address, OSI model layer 2 destination address, OSI model layer 3 source address, OSI model layer 3 destination address, VLAN tag, MPLS labels, protocol, application, and quality of service (QoS) parameters.

The invention in other embodiments is a source network device for transmitting a substantially identical copy of one or more qualified packets to a target network device. The source network device preferably comprises a flow resolution logic for selecting one or more qualified packets from an ingress packet stream; a replicator for duplicating the one or more qualified packets, such that one or more duplicate packets is formed; an encapsulation module for appending a mirrored flow encapsulation header to each of the one or more duplicate packets, such that one or more mirrored flow encapsulation packets is formed; and a queue memory for buffering the one or more mirrored flow encapsulation packets until the mirrored flow encapsulation packets are transmitted to the target network device. In some embodiments, the source network device is a switching device for performing layer 2 and layer 3 packet processing.

In some embodiments, the mirrored flow encapsulation header comprises a network layer encapsulation header including the destination address of the target network device. In alternative embodiments, however, the encapsulation header comprises a label such as an MPLS label used to provide OSI layer 2 switching of the mirrored traffic from the source network device to the target network device. The qualified packets preferably retain the network layer encapsulation header including an IP destination address of the intended recipient or source network device, for example.

The invention in other embodiments is a target network device for receiving one or more mirrored flow encapsulation packets from a source network device. Each of the mirrored flow encapsulation packets preferably includes a mirrored flow encapsulation header and a qualified packet. The target network device preferably comprises a flow resolution logic for selecting one or more mirrored flow encapsulation packets from an ingress packet stream; and a de-encapsulation module for removing the mirrored flow encapsulation header from each of the one or more mirrored flow encapsulation packets. With the invention, qualified packets substantially identical to that received at the source network device are regenerated at the target network device where they may be analyzed, recorded or otherwise processed. In some embodiments, the target network device is a switching device for performing layer 2 and layer 3 packet processing.

In some embodiments, the target network device further includes one or more queue memory devices for buffering each qualified packet until the qualified packet is transmitted to an egress port of the target network device. The egress port to which each qualified packet is distributed is preferably designated by a network administrator, and is not controlled by the original destination addressing information in the network layer or data link layer encapsulation headers.

The invention in the some embodiments features a traffic mirroring method comprising the steps of receiving an ingress packet, duplicating the ingress packet, such that a duplicate packet is formed; encapsulating the duplicate packet with a mirrored flow header; and transmitting, using information in the mirrored flow header, the duplicate packet from a first network node, e.g. a source network device, to a second network node, e.g. a target network device.

The invention in another embodiment features a traffic mirroring network which comprises a first network node interconnected to a second network node, wherein the first network node receives an ingress packet; duplicates the ingress packet such that a duplicate packet is formed; encapsulates the duplicate packet with a mirrored flow header, such that a mirrored flow packet is formed; and transmits, using information in the mirrored flow header, the duplicate packet from a first network node to the second network node.

Upon receipt at the second network node, the mirrored flow packet is de-encapsulated by removing the mirrored flow header. The resulting de-encapsulated packet that is recovered is substantially identical to the ingress packet. The de-encapsulated packet may then be transmitted to and processed by an analysis device connected to the second network node as if the analysis tool were actually connected directly to the first network node.

In some embodiments, the mirrored flow header comprises a network layer encapsulation header. The network layer encapsulation header is, in the preferred embodiment, an IP header that comprises the IP destination address of the second network node, while alternative embodiments employ a label such as an MPLS label. The ingress packet to which the network layer encapsulation header is attached preferably retains its own network layer header including the IP and MAC destination addresses used to convey the ingress packet to the intended recipient, i.e. a destination node reachable through the first network node, such as the first network node itself or another network node.

The ingress packet is preferably classified as part of a mirrored flow using mirror classification criteria. The mirror classification criteria include, for example, one or more of ingress port number, egress port number, source MAC address, destination MAC address, source IP address, destination IP address, VLAN tag, MPLS label, protocol type, application type, and quality of service parameters.

The invention in other embodiments features a network node comprising an ingress module for receiving a packet on an input port. A classification module for identifying the packet as belonging to a mirrored flow; a replication module for duplicating the packet, such that a duplicate packet is formed; an encapsulation module for appending a mirrored flow header to the duplicate packet; a memory for temporarily storing the duplicate packet; and an egress module for transmitting, using information in the mirrored flow header, the duplicate packet on an output port. In some embodiments, the network node is a switching device for performing layer 2 and layer 3 packet processing.

The invention in other embodiments is a network node for receiving a duplicate packet. The duplicate packet preferably includes a mirrored flow header. The network node preferably comprises an ingress module for classifying a packet from an ingress packet stream as belonging to a mirrored flow; and a de-encapsulation module for removing the mirrored flow header from the duplicate packet. With the invention, duplicates are regenerated at the target network device where they may be analyzed, recorded or otherwise processed. In some embodiments, the network node is a switching device for performing layer 2 and layer 3 packet processing.

In some embodiments, the network node further includes a memory for storing the de-capsulated duplicate packet until the de-capsulated duplicate packet is transmitted to an egress port of the network node. The egress port to which the de-capsulated duplicate packet is distributed is selected independently of any addressing information in the duplicate packet.

### BRIEF DESCRIPTION OF THE DRAWINGS

The present invention is illustrated by way of example and not limitation in the figures of the accompanying drawings, and in which:
FIG. 1 is a network over which the present invention may be used to transmit mirrored traffic from a source network device to a target network device, according to the preferred embodiment of the present invention;
FIG. 2 is a source network device at which mirrored traffic is generated according to the preferred embodiment of the present invention;
FIG. 3 is a target network device at which mirrored traffic is received and processed according to the preferred embodiment of the present invention;
FIG. 4 is a method by which the source network device processes packets according to the preferred embodiment of the present invention; and
FIG. 5 is a method by which the target network device processes packets according to the preferred embodiment of the present invention.

### DETAILED DESCRIPTION

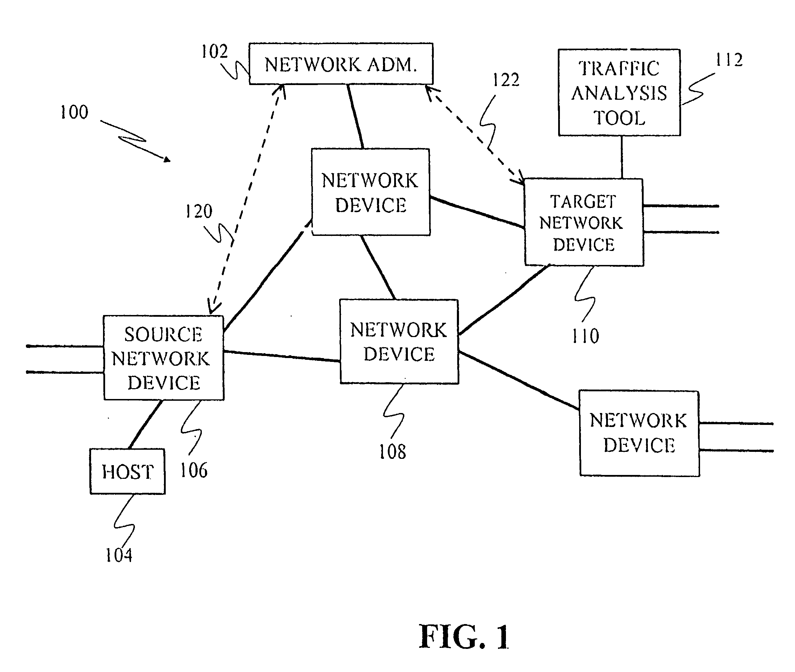

Referring to FIG. 1, a distributed network with which the present invention may be implemented is illustrated. The network 100 may be the Internet, an intranet, a local area network (LAN), a wide area network (WAN), or a metropolitan area network (MAN), for example. The network 100 is comprised of a plurality of network devices, one or more host devices, and a network administrator operatively coupled by means of wired, wireless, and or optical connections. The network devices are generally capable of layer 2 and or layer 3 switching operations as defined in the OSI network model.

A first host 104 is connected to the network 100 by means of a first network device, source network device (SND) 106. A network administrator 102 with a network management tool, for example, is in direct or indirect communication with the SND 106 as indicated by the communication link 120. The network 100 may further include a traffic analysis tool 112, for example, connected to a second network device, target network device (TND) 110, to which a network administrator such as network administrator 102, for example, has management privileges. The SND 106 is operably coupled to the TND 110 either directly or indirectly by means of one or more transit network devices including one or more switches, routers, and switch routers. The host 104 may be any device for generating traffic including a workstation, server, personal computer, local area network (LAN), VoIP network phone, or Internet appliance, for example. The source network device and/or second network device generally is a network node or other addressable entity embodied in a processor, computer, or other appliance.

As with other prior art systems, the SND 106 is configured such that the network administrator 102 can direct traffic received on a specific port of the device to be reproduced (or mirrored) on another port in the given network device. This function is currently support in a wide range of routing and switching devices. Unlike the prior art, however, the present embodiment of the SND 106 may be configured to direct a copy of the traffic to another network device without altering the contents including the Layer 2 and Layer 3 addressing information of the packets as received by original network device. The present invention may therefore be used to transmit traffic including the original source address from one device to another where the traffic may be analyzed using a traffic analysis tool, for example. In the preferred embodiment, select traffic is encapsulated at a source network device with a temporary packet header including address information allowing the traffic to be forwarded through multiple network devices to a target network device anywhere in the network 100.

According to the preferred embodiment of the present invention, the traffic at the SND 106 may be delivered to another suitably configured device anywhere in the network 100 so that the original, unmodified traffic may be analyzed, monitored, or otherwise processed. In the preferred embodiment, the traffic forwarded from the SND 106 to the TND 110 is referred to herein as "mirrored traffic" or "mirrored flow," and is comprised of mirrored packets. A mirrored packet includes a substantially-identical duplicate of the original packet received at the SND 106, which need not be co-located with the traffic analysis tool 112 used to analyze the mirrored flow.

The traffic identified as the mirrored flow at the SND 106 may originate from one or more designated ingress ports, be designated for one or more egress ports, or qualify as a subset of the traffic flow, a "conversation," that satisfies a particular rule set defined by the administrator 102. After the mirrored traffic is delivered to the TND 110, the traffic may be analyzed internally or by an end device, such as traffic analysis tool 112. Using the present invention, the mirrored traffic originating at the SND 104 may be remotely processed at the TND 110 without any alteration of the information contained therein, and without the need of the administrator being co-located in the immediate proximity of the SND 106, TND 110, or traffic analysis tool 112.

Note that the terms "source network device" and "target network device" are defined with respect to the direction of mirrored flow, which may be transmitted between any compatible routers, switches, or switch routers. One skilled in the art will also recognize that the SND 106 described in detail below may also serve as the target network device to one or more other mirrored flows, while the TND 110 described in detail below may also serve as the source network device to one or more other mirrored flows.

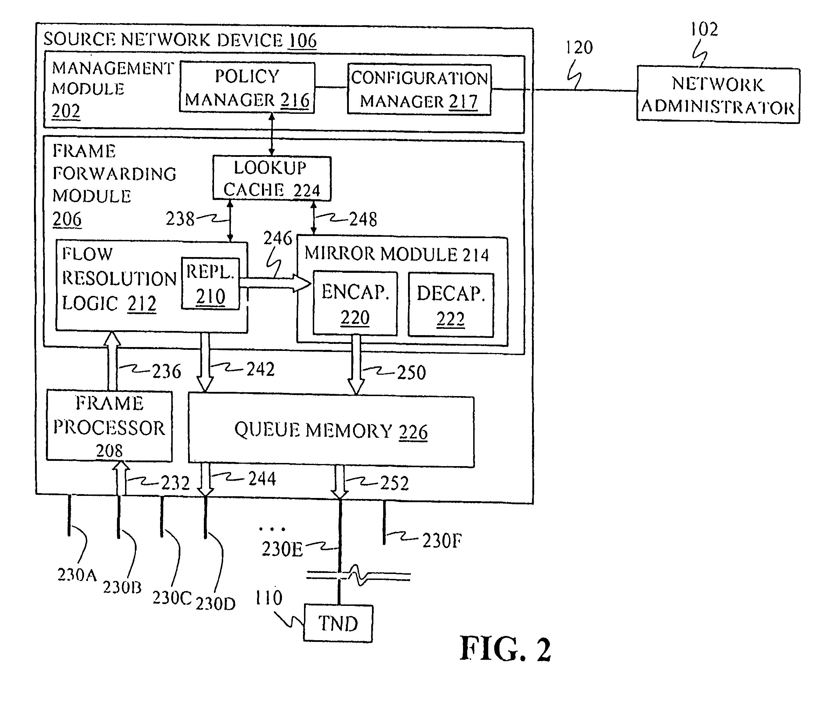

A source network device at which mirrored traffic is generated according to the preferred embodiment is illustrated in FIG. 2. The SND 106 preferably includes a plurality of ports 230A-230F, one or more frame processors 208, one or more frame forwarding modules 206, a management module 202, and one or more instances of queue memory 226. Packets are received on one or more ingress ports and the packets processed for transmission out one or more egress ports, which may be the same ports as the ingress ports. In particular, the protocol data units (PDUs) of an "ingress stream" received on a port 230B, for example, are forwarded to the frame processor 208 which parses the incoming stream into individual "ingress packets" that are transmitted to the frame forwarding module 206.

For purposes of this disclosure, the term "ingress packets" as used herein generally refer to the packets received by a network device prior to internal modification of the packets by the processes necessary to switch, route, or mirror those packets.

The ingress packets are then passed to the frame forwarding module 206 by way of connection 236 and received by the flow resolution logic (FRL) 212. The frame forwarding module 206 is comprised of the FRL 212 that generally processes the ingress packets for layer 2 switching or layer 3 routing, the lookup cache 224, and the mirror module 214 that processes "qualified packets" for mirroring. In particular, the FRL 212 parses each packet and consults the lookup cache 224 to determine how the packet is to be processed. The lookup cache 224 preferably includes one or more memory devices used to retain one or more tables necessary to switch an incoming packet to the appropriate port, modify the packet header in accordance with a networking protocol such as Transmission Control Protocol / Internet Protocol (TCP/IP), and/or identify the packet for purposes of mirroring. The source and destination addresses retained in lookup cache 225 are determined by the control protocols of the networking layers, or the addresses can be statically defined. The rules sets used to process incoming traffic more generally, are defined by the policy manager 216 or by the network administrator 102 by means of the configuration manager 217.

The processing at the FRL 212 preferably includes the packet modification necessary to send and receive mirrored traffic between source network devices and target network device. Such modifications may include changes to the layer 2 source address, layer 2 destination address, time-to-live (TTL) field, for example. After the appropriate modifications are made to the packets at the FRL 212, the packets are forwarded to queue memory 226.

The stream of packets 242 generated by the FRL 212 is forwarded to queue memory 224 where the individual "egress packets" are buffered in the appropriate queue prior to being transmitted out the designated egress port of the SND 106 to the network nodes in accordance with the destination address or addresses provided therein. The egress stream 242 generally includes traffic comprised of packets that qualify for mirroring as well as those that do not.

Independent of the egress stream 242 that has undergone conventional packet processing, the FRL 212 tests for and identifies packets that need be mirrored from the SND 106 to one or more target network devices including TND 110. If an ingress packet satisfies "mirror classification criteria" prescribed in the policy manager 216 and made available in lookup cache 224, then a duplicate of the packet is generated at replicator 210. A duplicate packet preferably includes all the original addressing information contained in the ingress packet including the network encapsulation header, e.g. IP header, and the data link layer header, e.g. Ethernet header.

Duplicate packets 246 are forwarded from the FRL 212 to the encapsulation module 220 of the mirror module 214. The mirror classification criteria may take the form of one or more rules that specify the traffic from an ingress port, traffic to an egress port, or any subset of thereof. A subset of the traffic on an ingress or egress port may be defined by any of a number of criteria including but not limited to port number, layer 2 source and destination address, VLAN tag, MPLS labels, layer 3 source and destination address, protocol application, or quality of service (QoS) parameter. Alternatively, all the traffic received on an ingress port(s) or transmitted on an egress port(s) could be selected for mirroring. The mirror classification criteria may also include one or more fields to label or otherwise identify mirrored traffic at a target device, as discussed below.

In the preferred embodiment, the duplicate packets 246 generated at replicator 210 are transmitted to the mirror module 214 in addition to the stream of egress packets 242 forwarded according to conventional switching and routing mechanisms. As such, the traffic at the SND 106 may be remotely analyzed without disturbing any ongoing transmissions within the network 100.

Duplicate packets 246 that are forwarded to the mirror module 214 are generally processed by the encapsulation module 220 of the mirror module 214. Encapsulation refers to the process by which new addressing and or labeling information is added onto an existing, intact packet for purposes of transmitting the packet from the source network device to the target network device. In the preferred embodiment, a new mirrored flow encapsulation (MFE) header is appended to front of the duplicate packet preceding any existing network headers such as an Ethernet header and an IP header present in the unmodified packet. In some embodiments, a new footer including a MFE frame check sequence (FCS) is also appended to the end of the duplicate packet.

The MFE header preferably includes a new destination address, i.e. the TND 110, and a new source address, i.e. the SND 106. The destination address may be included by means of a new network encapsulation header, e.g. IP header, and a new data link layer header, e.g. Ethernet header. The destination address, specified by the network administrator 102 via the configuration manager 217, is uploaded to the policy manager 216 and made available to the mirror module 214 by means of the lookup cache 224. The MFE FCS is calculated from the rest of the packet's data using a 32-bit cyclic-redundancy check (CRC-32) algorithm, for example.

The new packet including the MFE header is referred to herein as a MFE packet. The stream of MFE packets 250 is then forwarded to the queue memory where they are queued and buffered prior to being transmitted to the appropriated egress port in the direction of the TND 110. The MFE packets propagate towards the TND 110 by transit network devices such as switches and routers that make forwarding decisions based on the MFE header. The original header of the packet received at the source network device 106 is treated as part of the payload of the MFE packet.

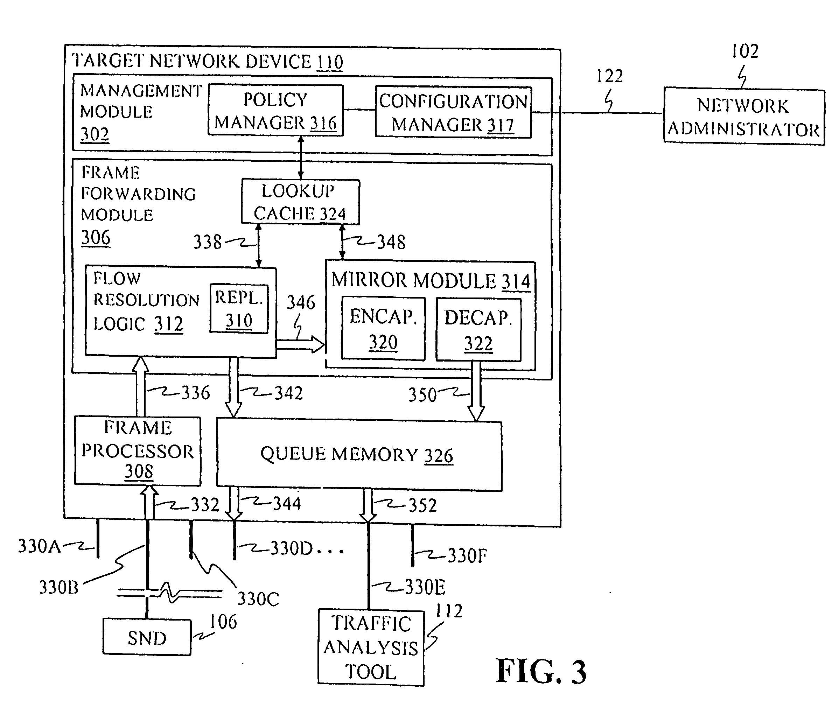

After propagating through the network 100, the MFE packet or packets subsequently arrive at the target network device, TND 110 illustrated in FIG. 3. The TND 110 in the preferred embodiment is substantially similar to the SND 106, and preferably includes a plurality of ports 330A-330F, one or more frame processors 308, one or more frame forwarding modules 306, management module 302, and one or more instances of queue memory 326. The MFE packets and other non-mirrored traffic received on the plurality of ingress ports collectively constitute the ingress traffic. The ingress traffic 332, for example, received on a port 330B is forwarded to a frame processor 308 which parses the incoming stream into individual "ingress packets" that are transmitted to the flow resolution logic 312 in the frame forwarding module 306.

As described above, the FRL 312 consults one or more address tables in lookup cache 324 for forwarding information. In addition to the conventional destination address tables used for layer 2 switching and layer 3 routing, the lookup cache 324 identifies the MFE packets to be culled from the standard processing using "target classification criteria" in policy manager 316. The target classification criteria may take the form of one or more rules that may include the source address of the source network device 106, the port number of the mirrored traffic, the destination address of the target network device 110, and or another label used to uniquely identify mirrored traffic using a convention known to the source and target network devices.

With the exception of the MFE packets from a source network device such as SND 106, the flow resolution logic 312 preferably processes the incoming packets for layer 2 switching or layer 3 routing using the addressing tables in lookup cache 324. The resulting egress flow 342 is forwarded to queue memory 326 and out the appropriate egress port, consistent with the treatment in SND 106.

On the other hand, the MFE packets of the ingress stream 336 that are identified in FRL 314 using the target classification criteria are directly forwarded to the mirror module 314. In particular, the incoming MFE packets are transmitted to the de-encapsulation module 322 of the mirror module 314. The MFE packets are not processed by the layer 2 switching and layer 3 routing functions in the frame forwarding module 306. Nor are the MFE packets duplicated by the replicator 310 as the "qualified" packets where at the SND 106.

Notwithstanding the de-encapsulation of the mirrored traffic from SND 106, the frame forwarding module 306 may still generate MFE packets in the case that the TND 110 is sourcing a different mirrored flow to another target network device (not illustrated).

At the de-encapsulation module 322, the MFE header is removed and the original, un-encapsulated packet received at the SND 106 regenerated. Using the egress port number provided by the network administrator 102 and retained in lookup cache 324, the un-encapsulated packet is pushed to the queue memory 326 where it is buffered until transmitted out the designated port, e.g. port 330E, where it is processed by a traffic analysis tool 112, a device to store network traffic, or some other device. The egress port used to output the mirrored flow is preferably specified by the network administrator 102 when configuring the mirrored flow. The unencapsulated packet cannot be forwarded by the normal Layer 2 and Layer 3 processing. It therefore is placed in a queue memory location that causes the packet to be sent at a specific port e.g. 330E.

The traffic analysis tool 112 may be any of a variety of tools used to analyze network traffic. These include but are not limited to: tools that display the addresses and contents of the packet to allow a network engineer to diagnose problems or mis-configuration in the network, tools that analyze traffic to identify attempts to hack into the network, tools that analyze traffic to determine if the security of the network or a device on the network has been compromised, and tools that simply record the contents of the packet onto a storage medium for later offline analysis.

In some embodiments, the MFE packets are switched from the SND 106 to the TND 110 using a label switched path (LSP) constructed using a multi-protocol label switching (MPLS) protocol such as a resource reservation setup protocol (RSVP) or label distribution protocol (LDP). The label is then incorporated into he MFE header, thereby permitting the MFE packet to be label switched through the network 100.

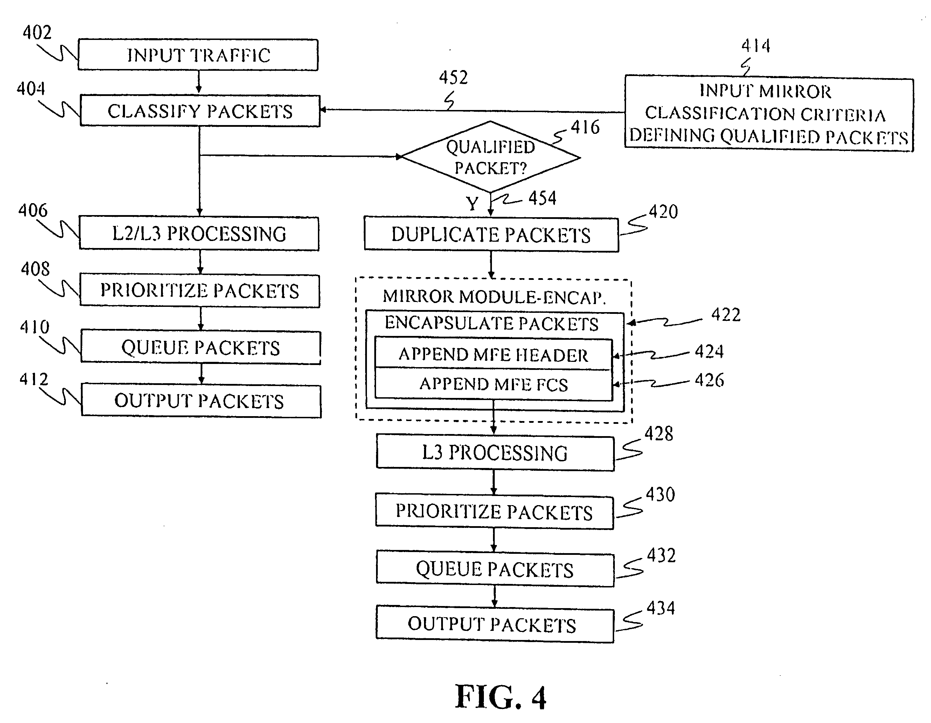

Referring to FIG. 4, the method by which the source network device 106 processes packets according to the preferred embodiment is illustrated. A source network device, source network device 106 in the preferred embodiment, receives ingress traffic in step 402 from a plurality of ports. The ingress traffic comprises protocol data units (PDU) that are individually classified 404 in order to determine if the "mirror classification criteria" provided by the network administrator are satisfied. The mirror classification criteria 452 provided as input to the SND 106 and input 414 to define the traffic flow(s) to be mirrored to the target network device, TND 110. Packets that satisfy the mirror classification criteria 452 are referred to herein as "qualified packets" or "qualified traffic."

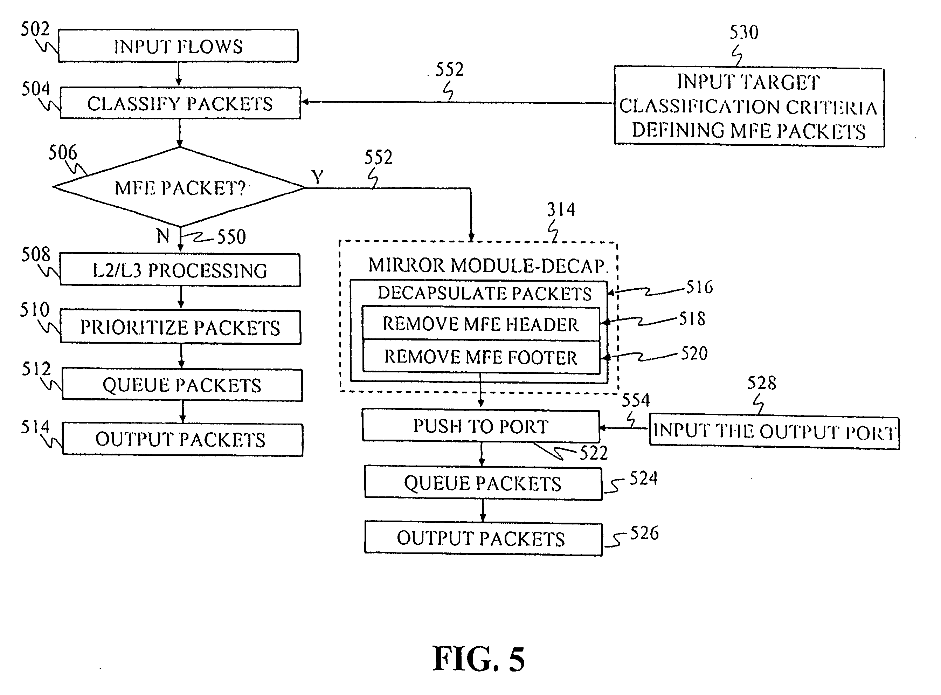

The mirror classification criteria 452 used to define the qualified packets may include one or more of the following: incoming switch port number; egress switch port number, layer 2 source address; layer 2 destination address; VLAN tag; MPLS labels, QoS parameters; layer 3 source address, layer 3 destination address, protocol type, application and/or specific contents in the packet. The fields specified in classification criteria 452 are compared to the contents of the packet being processed. If all the fields specified in the classification criteria match the characteristics or contents of the packet, the packet is determined to be a qualified packet. One skilled in the art will appreciate that the SND 106 may also serves as a target network device for another mirrored flow, in which case the classification in step 404 will also identify and process those packets consistent with the process illustrated in FIG. 5 described below.

In general, all packets, irrespective of whether they are qualified packets, are conveyed to the flow resolution logic 212 where they undergo the appropriate OSI model layer 2 or layer 3 processing406. The packets are then prioritized 408 and 410 and provided 410 to queue memory 226 prior to being distributed 412 to the appropriate egress port in step 412.

Qualified packets satisfying the mirror classification criteria 452 are selected 416 for additional processing in the preferred embodiment. The processing includes duplication 420 of the qualified packets by the replicator 210. A duplicated packet, including the original address information of the ingress packet, is preferably encapsulated with the MFE header and MFE footer in the encapsulation module 220. In the preferred embodiment, the encapsulating step 422 generally comprises the steps of appending 424 an MFE header including the destination address of the target network device, data 452, provided by the network administrator during the step of inputting classification criteria 414, and appending 426 an MFE FCS 426 to account for the increased length of the MFE packet.

In the preferred embodiment, the duplication and encapsulation of the qualified packets occurs in the frame forwarding module 206, although one skilled in the art will appreciate that there are numerous alternative ways of implementing the method in hardware, software, and/or firmware. One skilled in the art will also recognize that a plurality of qualified flows may be defined in step 414, each of which may have a unique target network device.

The encapsulated packets are then generally prepared 428 for OSI model layer 3 forwarding based upon the address information in the MFE header, as illustrated in step 428. The original header of the un-encapsulated packets, although retained in the encapsulated MFE packet, is of no significance subsequent to encapsulation. The encapsulated MFE packets are preferably routed towards the target network device based upon standard IP or comparable protocol that can forward frames across a network of heterogeneous devices. The encapsulated packets are prioritized 430 and queued 432 at queue memory 226 prior to being transmitted 434 on the appropriate egress port.

Referring to FIG. 5, a method by which the target network device processes packets according to the preferred embodiment is illustrated. A target network device, the TND 110 in the preferred embodiment, receives 502 ingress traffic from a plurality of ingress ports. The individual packets are classified 504 and processed according to the addressing tables in the lookup cache 324. As illustrated in decision block 506, non-MFE packets that fail to satisfy the "target classification criteria" 552 provided 530 by the network administrator are processed using conventional methods, including layer 2 switching and layer 3 routing 508.

If the TND 110 also serves as a source network device for an additional mirrored flow, the classification 504 may also be used to identify those packets that satisfy mirror classification criteria consistent with the process illustrated in FIG. 4. The non-MFE conventional packets are then prioritized 510 and queued 512 prior to being transmitted on the appropriate egress port 508.

Mirrored MFE packets, however, are identified as part of the classification step 504 using the target classification criteria 552 provided to the TND 110 by the network administrator 102. In the preferred embodiment, the incoming MFE packets are culled 506 from the normal processing channels and directed 552 to the mirror module 314 where they undergo de-encapsulation.

After segregating the MFE packets from the conventional traffic flow, the process of de-encapsulation 516 preferably reverses the encapsulation process that occurred in the encapsulation module of the source network device. In the preferred embodiment, de-encapsulation entails removing the MFE header 518 and removing the MFE footer 520. The output of the mirror module 314 is thus a de-encapsulated packet that is an exact mirror copy of, or otherwise substantially similar to, the unmodified ingress packet received by the SND 106.

The de-encapsulated packets are pushed 522 towards the particular egress port 554 specified 528 by the network administration. The de-encapsulated packets are then buffered 524 in queue memory 326 prior to being transmitted 526 to the designated egress port. One skilled in the art will recognize that the de-encapsulated packets in this embodiment do not undergo conventional switching operations since the layer 2 and layer 3 addressing information of the original packet would cause the packet to be routed to the packets original destination instead of the designated egress port of the TND 110.

The MFE header for encapsulating a mirrored flow packet may take any of a number of forms. In the first preferred embodiment immediately below, the MFE header includes the IP destination address of the TND 110, and the MFE packets transmitted between the SND 106 and the TND 110 using conventional TCP/IP.
- Octet 1-6: Destination MAC address;
- Octet 7-12: Source MAC Address;
- Octet 13, 14: Ethertype, IP = 0x00000800;
- Octet 15: Version, preferably 4 bits, and Internet Header Length, preferably 4 bits, used to specify the length of the IP packet header in 32 bit words;
- Octet 16: Type of Service/DiffServ;
- Octet 17,18: Total Length of Frame;
- Octet 19,20: Identification, preferably 16 bits, used to identify the fragments of one datagram from those of another, is a unique value for a given source-destination pair and protocol for the time the datagram will be active in the internet system;
- Octet 20,21: Flags, preferably 3 bits, and Fragment Offset, preferably 13 bits;
- Octet 23: Time to Live (TTL);
- Octet 24: Protocol, e.g. UDP = 17;
- Octet 25,26: IP Header Checksum;
- Octet 27-30: IP Source Address of the Source Network Device;
- Octet 31-34: IP Destination Address of the Target Network Device;
- Octet 35-37: Options;
- Octet 38: Pad;
- Octet 39,40: Source Port, preferably 50000;
- Octet 41,42: Destination Port, preferably 50000;
- Octet 43,44: Length of the Mirrored Frame with UDP Header;
- Octet 45, 46: Checksum with the UDP Header and Mirrored Frame;
- Octet 47-52: Destination MAC Address of the Original Mirrored Frame;
- Octet 53-58: Source MAC Address of the Original Mirrored Frame; and
- Octet 59-: Remainder of Mirrored Frame.

In the second preferred embodiment immediately below, the MFE header includes an MPLS label of the TND 110, and the MFE packets transmitted between the SND 106 and the TND 110 using conventional using a label switch path established prior to transmission of the MFE packets.
- Octet 1-6: MAC DA of next hop device;
- Octet 7-12: MAC SA of source device;
- Octet 13-14: ETHERTYPE, MPLS=0x8847
- Octet 15-18: MPLS Label 1 - identifying target device;
- Octet 19-22: MPLS Label 2 - identifying mirrored traffic; and
- Octet 23-: Remainder of Mirrored Frame.

One skilled in the art will recognize that there are numerous alternative embodiments and frame encapsulation techniques that would achieve the same result with insubstantial changes to the content or organization of the MFE headers described herein.

The invention has been disclosed by way of example and not limitation, and reference should be made to the following claims to determine the scope of the present invention.

## Claims

1. A traffic mirroring method of transmitting incoming packets from a source network device (106) to a target network device (110), comprising the steps of:
(a) selecting one or more packets from an ingress stream using mirror classification criteria, whereby one or more qualified packets are obtained,
(b) duplicating said one or more qualified packets, whereby duplicate packets are formed;
(c) encapsulating said duplicate packets with a mirrored flow encapsulation header, whereby one or more mirrored flow encapsulation packets are formed;
(d) transmitting said one or more mirrored flow encapsulation packets from the source network device (106) to the target network device (110); and
(e) transmitting each of the one or more packets from an ingress stream from the source network device (106) to one or more network nodes in accordance with a destination address information contained therein.

2. The traffic mirroring method of claim 1, wherein the mirrored flow encapsulation header comprises a network layer encapsulation header.

3. The traffic mirroring method of claim 2, wherein the network layer encapsulation header is an Internet Protocol header comprising the destination address of the target network device (110), and wherein at least one of the plurality of ingress packets comprises a network layer header comprising an Internet Protocol destination address of an intended recipient reachable through the source network device (106).

4. The traffic mirroring method of claim 1, wherein the mirror classification criteria comprise one or more criteria selected from the group consisting of: ingress and egress physical port number, OSI model layer 2 source address, OSI model layer 2 destination address, OSI model layer 3 source address, OSI model layer 3 destination address, VLAN tag, MPLS labels, protocol, application, and quality of service parameters.

5. The traffic mirroring method of claim 1, wherein the mirrored flow encapsulation header comprises a label for switching the plurality of mirrored flow encapsulation packets between the source network device (106) and target network device (110).

6. The traffic mirroring method of claim 5, wherein the label is a MPLS label.

7. A source network device (106) for transmitting packets to a target network device (110), the source network device (106) comprising:
(a) a flow resolution logic (212) for:
(i) processing one or more packets from an ingress stream for switching, whereby one or more egress packets is formed; and
(ii) selecting one or more packets from said ingress stream using mirror classification criteria, whereby one or more qualified packets are obtained;
(b) a replicator (210) for duplicating the one or more qualified packets, whereby one or more duplicate packets are formed;
(c) an encapsulation module (220) for appending a mirrored flow encapsulation header to each of the one or more duplicate packets, whereby one or more mirrored flow encapsulation packets are formed; and
(d) one or more queue memory devices (226) for buffering the:
(i) one or more egress packets prior to transmission to one or more network nodes, and
(ii) one or more mirrored flow encapsulation packets prior to transmission to the target network device (110).

8. The source network device (106) of claim 7, wherein the mirrored flow encapsulation header comprises a network layer encapsulation header including the destination address of the target network device (110).

9. The source network device (106) of claim 8, wherein at least one of the one or more qualified packets comprises a network layer header comprising an Internet Protocol destination address of an intended recipient reachable through the source network device (106).

10. The source network device of claim 7, wherein the mirror classification criteria for selecting the one or more packets from the ingress stream comprise one or more criteria selected from the group consisting of: ingress and egress port number, OSI model layer 2 source address, OSI model layer 2 destination address, OSI model layer 3 source address, OSI model layer 3 destination address, VLAN tag, MPLS label, protocol type, protocol version, software application, and quality of service parameter.

11. The source network device of claim 7, wherein the mirrored flow encapsulation header comprises a label for switching the plurality of mirrored flow encapsulation packets between the source network device (106) and target network device (110).

12. The source network device (106) of claim 11, wherein the label is a MPLS label.

13. A traffic mirroring system comprising a source network device (106) according to one of the claims 7 to 12 and a target network device (110) for receiving one or more mirrored flow encapsulation packets from said source network device (106), each of the mirrored flow encapsulation packets comprising a mirrored flow encapsulation header and a qualified packet, the target network device (110) comprising:
(a) a flow resolution logic (312) for:
(i) processing one or more packets from an ingress stream for switching, wherein one or more egress packets are formed; and
(ii) selecting one or more mirrored flow encapsulation packets from the ingress stream;
a de-encapsulation module (322) for removing the mirrored flow encapsulation header from each of the one or more mirrored flow encapsulation packets.

14. The traffic mirroring system of claim 13, wherein the target network device (110) further comprises one or more queue memory devices (326) for buffering the one or more egress packets prior to transmission to one or more network nodes, and for buffering one or more qualified packets prior to transmission to an egress port of the target network device (110).

15. The traffic mirroring system of claim 14, wherein the egress port to which each qualified packet is transmitted is designated by a network administrator.

16. The traffic mirroring system of claim 14, wherein at least one of the qualified packets transmitted to the egress port of the target network device (110) retains a destination address for the source network device (110).

17. The traffic mirroring system of claim 13, wherein the mirrored flow encapsulation header comprises a network layer encapsulation header including a destination address of the target network device (110).

## Patentansprüche

1. Verfahren zur Verkehrsspiegelung des Sendens ankommender Pakete von einem Quellnetzwerkgerät (106) zu einem Zielnetzwerkgerät (110), das folgende Schritte umfasst:
(a) Auswählen eines oder mehrerer Pakete aus einem Ingress-Strom mithilfe von Spiegelklassifikationskriterien, wodurch ein oder mehrere qualifizierte Pakete erhalten werden,
(b) Duplizieren des einen oder der mehreren qualifizierten Pakete, wodurch Duplikatpakete gebildet werden;
(c) Einkapseln der Duplikatpakete mit einem Einkapselheader des gespiegelten Flusses, wodurch ein oder mehrere Einkapselpakete des gespiegelten Flusses gebildet werden;
(d) Senden des einen oder der mehreren Einkapselpakete des gespiegelten Flusses vom Quellnetzwerkgerät (106) zum Zielnetzwerkgerät (110) und
(e) Senden jedes des einen oder der mehreren Pakete aus einem Ingress-Strom vom Quellnetzwerkgerät (106) zu einem oder mehreren Netzwerkknoten gemäß einer darin enthaltenen Zieladresseninformation.

2. Verfahren zur Verkehrsspiegelung nach Anspruch 1, wobei der Einkapselheader des gespiegelten Flusses einen Netzwerkschicht-Einkapselheader umfasst.

3. verfahren zur Verkehrsspiegelung nach Anspruch 2, wobei der Netzwerkschicht-Einkapselheader ein Internet-Protokoll-Header ist, der die Zieladresse des Zielnetzwerkgeräts (110) umfasst, und wobei mindestens eines der mehreren Ingress-Pakete einen Netzwerkschicht-Header umfasst, der eine Internet-Protokoll-Zieladresse eines vorgesehenen Empfängers umfasst, der über das Quellnetzwerkgerät (106) erreichbar ist.

4. Verfahren zur Verkehrsspiegelung nach Anspruch 1, wobei die Spiegelklassifikationskriterien ein oder mehrere Kriterien umfassen, die aus der Gruppe ausgewählt sind, die besteht aus: Nummer der physikalischen Ingress- und Egress-Ports, Quelladresse der OSI-Modell-Schicht 2, Zieladresse der OSI-Modell-Schicht 2, Quelladresse der OSI-Modell-Schicht 3, Zieladresse der OSI-Modell-Schicht 3, VLAN-Tag, MPLS-Label, Protokoll, Anwendung und Dienstqualitäts-Parameter.

5. Verfahren zur Verkehrsspiegelung nach Anspruch 1, wobei der Einkapselheader des gespiegelten Flusses ein Label zum Vermitteln der mehreren Einkapselpakete des gespiegelten Flusses zwischen dem Quellnetzwerkgerät (106) und dem Zielnetzwerkgerät (110) umfasst.

6. Verfahren zur Verkehrsspiegelung nach Anspruch 5, wobei das Label ein MPLS-Label ist.

7. Quellnetzwerkgerät (106) zum Senden von Paketen zu einem Zielnetzwerkgerät (110), wobei das Quellnetzwerkgerät (106) umfasst:
(a) eine Flussauflöselogik (212) zum:
(i) Verarbeiten eines oder mehrerer Pakete aus einem Ingress-Strom zur Vermittlung, wodurch ein oder mehrere Egress-Pakete gebildet werden; und
(ii) Auswählen eines oder mehrerer Pakete aus dem Ingress-Strom mithilfe von Spiegelklassifikationskriterien, wodurch ein oder mehrere qualifizierte Pakete erhalten werden;
(b) einen Replikator (210) zum Duplizieren des einen oder der mehreren qualifizierten Pakete, wodurch ein oder mehrere Duplikatpakete gebildet werden;
(c) ein Einkapselmodul (220) zum Anhängen eines Einkapselheaders des gespiegelten Flusses an jedes der einen oder mehreren Duplikatpakete, wodurch ein oder mehrere Einkapselpakete des gespiegelten Flusses gebildet werden; und
(d) ein oder mehrere Wartefeldspeichergeräte (226) zum Puffern:
(i) des einen oder der mehreren Egress-Pakete vor der Sendung zu einem oder mehreren Netzwerkknoten und
(ii) des einen oder der mehreren Einkapselpakete des gespiegelten Flusses vor der Sendung zum Zielnetzwerkgerät (110).

8. Quellnetzwerkgerät (106) nach Anspruch 7, wobei der Einkapselheader des gespiegelten Flusses einen Netzwerkschicht-Einkapselheader umfasst, der die Zieladresse des Zielnetzwerkgeräts (110) beinhaltet.

9. Quellnetzwerkgerät (106) nach Anspruch 8, wobei mindestens eines des einen oder der mehreren qualifizierten Pakete einen Netzwerkschicht-Header umfasst, der eine Internet-Protokoll-Zieladresse eines vorgesehenen Empfängers umfasst, der über das Quellnetzwerkgerät (106) erreichbar ist.

10. Quellnetzwerkgerät nach Anspruch 7, wobei die Spiegelklassifikationskriterien zum Auswählen des einen oder der mehreren Pakete aus dem Ingress-Strom ein oder mehrere Kriterien umfassen, die aus der Gruppe ausgewählt sind, die besteht aus: Ingress- und Egress-Portnummer, Quelladresse der OSI-Modell-Schicht 2, Zieladresse der OSI-Modell-Schicht 2, Quelladresse der OSI-Modell-Schicht 3, Zieladresse der OSI-Modell-Schicht 3, VLAN-Tag, MPLS-Label, Protokolltyp, Protokollversion, Software-Anwendung und Dienstqualitäts-Parameter.

11. Quellnetzwerkgerät nach Anspruch 7, wobei der Einkapselheader des gespiegelten Flusses ein Label zum Vermitteln der mehreren Einkapselpakete des gespiegelten Flusses zwischen dem Quellnetzwerkgerät (106) und dem Zielnetzwerkgerät (110) umfasst.

12. Quellnetzwerkgerät (106) nach Anspruch 11, wobei das Label ein MPLS-Label ist.

13. System zur Verkehrsspiegelung, das ein Quellnetzwerkgerät (106) gemäß einem der Ansprüche 7 bis 12 und ein Zielnetzwerkgerät (110) zum Empfangen eines oder mehrerer Einkapselpakete des gespiegelten Flusses vom Quellnetzwerkgerät (106) umfasst, wobei jedes der Einkapselpakete des gespiegelten Flusses einen Einkapselheader des gespiegelten Flusses und ein qualifiziertes Paket umfasst, wobei das Zielnetzwerkgerät (110) umfasst:
(a) eine Flussauflöselogik (312) zum:
(i) Verarbeiten eines oder mehrerer Pakete aus einem Ingress-Strom zur Vermittlung, wobei ein oder mehrere Egress-Pakete gebildet werden; und
(ii) Auswählen eines oder mehrerer Einkapselpakete des gespiegelten Flusses aus dem Ingress-Strom,
ein Entkapselmodul (322) zum Entfernen des Einkapselheaders des gespiegelten Flusses aus jedem des einen oder der mehreren Einkapselpakete des gespiegelten Flusses.

14. System zur Verkehrsspiegelung nach Anspruch 13, wobei das Zielnetzwerkgerät (110) ferner ein oder mehrere Wartefeldspeichergeräte (326) zum Puffern des einen oder der mehreren Egress-Pakete vor der Sendung zu einem oder mehreren Netzwerkknoten und zum Puffern eines oder mehrerer qualifizierter Pakete vor der Sendung zu einem Egress-Port des Zielnetzwerkgeräts (110) umfasst.

15. System zur Verkehrsspiegelung nach Anspruch 14, wobei der Egress-Port, an den jedes qualifizierte Paket gesendet wird, von einem Netzwerkadministrator bestimmt wird.

16. System zur Verkehrsspiegelung nach Anspruch 14, wobei mindestens eines der qualifizierten Pakete, das zum Egress-Port des Zielnetzwerkgeräts (110) gesendet wird, eine Zieladresse für das Quellnetzwerkgerät (110) behält.

17. System zur Verkehrsspiegelung nach Anspruch 13, wobei der Einkapselheader des gespiegelten Flusses einen Netzwerkschicht-Einkapselheader umfasst, der eine Zieladresse des Zielnetzwerkgeräts (110) beinhaltet.

## Revendications

1. Procédé de réflexion de trafic pour transmission de paquets entrants depuis un dispositif source du réseau (106) jusqu'à un dispositif cible du réseau (110), comprenant les étapes de :
(a) sélectionner un ou plusieurs paquets dans un flot d'entrée en utilisant des critères de classification pour réflexion, au moyen de quoi un ou plusieurs paquets qualifiés sont obtenus,
(b) copie dudit ou desdits paquets qualifiés, au moyen de quoi des copies de paquets sont formées ;
(c) emballage desdites copies de paquets au moyen d'un en-tête d'emballage de flux réfléchi, au moyen de quoi un ou plusieurs paquets d'emballage de flux réfléchi sont formés ;
(d) transmission dudit ou desdits paquets d'emballage de flux réfléchi depuis le dispositif source du réseau (106) jusqu'au dispositif cible du réseau (110) ; et
(e) transmission de chacun parmi le ou les paquets provenant d'un flot d'entrée du dispositif source du réseau (106) vers un ou plusieurs noeuds du réseau conformément à des informations d'adresse de destination qui y sont contenues.

2. Procédé de réflexion de trafic selon la revendication 1, dans lequel l'en-tête d'emballage de flux réfléchi comprend un en-tête d'emballage de couche réseau.

3. Procédé de réflexion de trafic selon la revendication 2, dans lequel l'en-tête d'emballage de couche réseau est un en-tête de protocole Internet comprenant l'adresse de destination du dispositif cible du réseau (110), et dans lequel au moins un parmi la pluralité de paquets d'entrée comprend un en-tête de couche réseau comprenant une adresse de destination de protocole Internet d'un destinataire souhaité pouvant être atteint par l'intermédiaire du dispositif source du réseau (106).

4. Procédé de réflexion de trafic selon la revendication 1, dans lequel les critères de classification pour réflexion comprennent un ou plusieurs critères choisis dans le groupe consistant en : un numéro matériel de port d'entrée et de sortie, une adresse d'origine de la couche 2 du modèle OSI ; une adresse de destination de la couche 2 du modèle OSI ; une adresse d'origine de la couche 3 du modèle OSI, une adresse de destination de la couche 3 du modèle OSI, une étiquette VLAN, des étiquettes MPLS, un protocole, une application et des paramètres de qualité de service.

5. Procédé de réflexion de trafic selon la revendication 1, dans lequel l'en-tête d'emballage de flux réfléchi comprend une étiquette servant à commuter la pluralité de paquets d'emballage de flux réfléchi entre le dispositif source du réseau (106) et le dispositif cible du réseau (110).

6. Procédé de réflexion de trafic selon la revendication 5, dans lequel l'étiquette est une étiquette MPLS.

7. Dispositif source du réseau (106) servant à transmettre des paquets à un dispositif cible du réseau (110), le dispositif source du réseau (106) comprenant :
(a) une logique de résolution du flux (212) servant :
(i) à traiter un ou plusieurs paquets d'un flot entrant pour commutation, au moyen de quoi un ou plusieurs paquets de sortie sont formés ; et
(ii) à sélectionner un ou plusieurs paquets dans ledit flot d'entrée en utilisant des critères de classification pour réflexion, au moyen de quoi un ou plusieurs paquets qualifiés sont obtenus ;
(b) un duplicateur (210) servant à reproduire le ou les paquets qualifiés, au moyen de quoi une ou plusieurs copies de paquets sont formées ;
(c) un module d'emballage (220) servant à ajouter un en-tête d'emballage de flux réfléchi à chacune de la ou des copies de paquets, au moyen de quoi un ou plusieurs paquets d'emballage de flux réfléchi sont formés ; et
(d) un ou plusieurs dispositifs de mémoire de file d'attente (226) servant à mettre en tampon :
(i) le ou les paquets de sortie avant transmission à un ou plusieurs noeuds du réseau, et
(ii) le ou les paquets d'emballage de flux réfléchi avant transmission au dispositif cible du réseau (110).

8. Le dispositif source du réseau (106) selon la revendication 7, dans lequel l'entête d'emballage de flux réfléchi comprend un en-tête d'emballage de couche réseau comprenant l'adresse de destination du dispositif cible du réseau (110).

9. Le dispositif source du réseau (106) selon la revendication 8, dans lequel au moins un du ou des paquets qualifiés comprend un en-tête de couche réseau comprenant une adresse de destination de protocole Internet d'un destinataire souhaité pouvant être atteint par l'intermédiaire du dispositif source du réseau (106).

10. Le dispositif source du réseau selon la revendication 7, dans lequel les critères de classification pour réflexion servant à sélectionner le ou les paquets dans le flot d'entrée comprennent un ou plusieurs critères sélectionnés dans le groupe consistant en : le numéro de port d'entrée et de sortie, l'adresse d'origine de la couche 2 du modèle OSI, l'adresse de destination de la couche 2 du modèle OSI, l'adresse source de la couche 3 du modèle OSI, l'adresse de destination de la couche 3 du modèle OSI, l'étiquette VLAN, l'étiquette MPLS, le type de protocole, la version du protocole, l'application du logiciel et un paramètre de qualité de service.

11. Le dispositif source du réseau selon la revendication 7, dans lequel l'en-tête d'emballage de flux réfléchi comprend une étiquette servant à commuter la pluralité de paquets d'emballage de flux réfléchi entre le dispositif source du réseau (106) et le dispositif cible du réseau (110).

12. Le dispositif source du réseau (106) selon la revendication 11, dans lequel l'étiquette est une étiquette MPLS.

13. Système de réflexion du trafic comprenant un dispositif source du réseau (106) selon une des revendications 7 à 12 et un dispositif cible du réseau (110) servant à recevoir un ou plusieurs paquets d'emballage de flux réfléchis à partir dudit dispositif source du réseau (106), chacun des paquets d'emballage de flux réfléchi comprenant un en-tête d'emballage de flux réfléchi et un paquet qualifié, le dispositif cible du réseau (110) comprenant :
(a) une logique de résolution de flux (312) servant :
(i) à traiter un ou plusieurs paquets d'un flot entrant pour commutation, au moyen de quoi un ou plusieurs paquets de sortie sont formés ; et
(ii) à sélectionner un ou plusieurs paquets d'emballage de flux réfléchi dans le flot d'entrée ;
un module de désemballage (322) servant à supprimer l'en-tête d'emballage de flux réfléchi de chacun du ou des paquets d'emballage de flux réfléchi.

14. Le système de réflexion de trafic selon la revendication 13, dans lequel le dispositif cible du réseau (110) comprend en outre un ou plusieurs dispositifs de mémoire de file d'attente (326) servant à mettre en tampon le ou les paquets de sortie avant transmission à un ou plusieurs noeuds du réseau et à mettre en tampon un ou plusieurs paquets qualifiés avant transmission à un port de sortie du dispositif cible du réseau (110).

15. Le système de réflexion de trafic selon la revendication 14, dans lequel le port de sortie auquel chaque paquet qualifié est transmis est désigné par un administrateur de réseau.

16. Le système de réflexion de trafic selon la revendication 14, dans lequel au moins un des paquets qualifiés transmis au port de sortie du dispositif cible du réseau (110) contient une adresse de destination pour le dispositif source du réseau (110).

17. Le système de réflexion de trafic selon la revendication 13, dans lequel l'entête d'emballage de flux réfléchi comprend un en-tête d'emballage de couche réseau comprenant une adresse de destination du dispositif cible du réseau (110).
